# EUROPÄISCHE PATENTSCHRIFT

(11) **EP 4 284 746 B1**
(45) Veröffentlichungstag und Bekanntmachung des Hinweises auf die Patenterteilung: **17.12.2025**
(21) Anmeldenummer: 22700311.8
(22) Anmeldetag: 06.01.2022
(51) Int. Cl.: B66B 23/00

(54) **FAHRTREPPE ODER EINES FAHRSTEIGES MIT EINEM STELLRING**
ESCALATOR OR MOVING WALKWAY WITH AN ADJUSTING RING
ESCALATEUR ROULANT OU D'UN TAPIS ROULANT AVEC UNE BAGUE D'ARRET

(30) Priorität: 27.01.2021 EP 21153816
(43) Veröffentlichungstag der Anmeldung: 06.12.2023
(73) Patentinhaber: INVENTIO AG, 6052 Hergiswil (CH)
(72) Erfinder: BERGER, Michael, 3433 Königstetten (AT)
(74) Vertreter: Inventio AG
(86) Internationale Anmeldenummer: PCT/EP2022/050190
(87) Internationale Veröffentlichungsnummer: WO 2022/161751

(56) Entgegenhaltungen:
- EP-A2- 1 616 834
- CN-U- 204 022 237

## Beschreibung

Die Erfindung betrifft eine Fahrtreppe oder einen Fahrsteig mit einem Stellring.

In der weiteren Beschreibung soll der Ausdruck Fahrtreppe auch Fahrsteige und der Ausdruck Stufe auch Fahrsteig-Paletten einschliessen.

Die Stufen einer Fahrtreppe sind an zwei Transportketten befestigt und bilden zusammen mit diesen ein endloses, umlaufendes Stufenband, das über je ein Paar Transportkettenräder an beiden Enden der Fahrtreppe läuft, wobei das eine Transportkettenradpaar zur Antriebsstation gehört und das Stufenband antreibt und umlenkt und das andere Transportkettenradpaar Teil einer Umlenkstation ist. Anstelle des letztgenannten Transportkettenradpaares können auch Umlenkbogen-Schienen in der Umlenkstation verwendet werden, so dass nur in der Antriebsstation ein Transportkettenradpaar vorhanden ist.

Bei einer Fahrtreppe bzw. einem Fahrsteig wird am oberen Treppenkopf eine Hauptantriebswelle eingebaut, wobei das vorangehend erwähnte Transportkettenpaar Teil dieser Hauptantriebswelle ist. Die Hauptantriebswelle wird beiden Endes in einem Tragwerk gelagert. Diese Lagerung ist so einfach wie möglich auszuführen, da bei einem Lagerschaden eine Demontage der Hauptantriebswelle erfolgen muss, die trotz einer möglichst leichten Bauweise immer noch 500kg wiegen kann.

Die Hauptantriebswelle treibt die Stufen bzw. Paletten an, welche auf Laufbahnschienen geführt werden. Um eine hochbelastbare, formstabile und dennoch gewichtsoptimierte Konstruktion zu erhalten, ist die Hauptantriebswelle als Hohlwellenkonstruktion ausgeführt. Eine derart ausgestaltete Hauptantriebswelle weist eine feststehende Achse auf, die im Tragwerk der Fahrtreppe gelagert ist. Um diese Achse wird eine Hohlwelle mit dem daran angeordneten Transportkettenradpaar angeordnet. Die Hohlwelle ist mittels Wälzlager auf der Achse drehbar gelagert. Die Achse, welche die Hohlwelle trägt, ist typischerweise fest am Tragwerk verschraubt. Eine solche Konstruktion wird beispielsweise in der EP 1 616 834 B1 beschrieben.

Sofern in der Umlenkstation eine Umlenkwelle mit einem Transportkettenradpaar vorgesehen ist, kann diese Umlenkwelle in gleicher Bauweise wie die Hauptantriebswelle ausgeführt sein. Sofern die Umlenkstation auch als Spannstation für das Stufenband dient, wird die Achse nicht starr, sondern über beidseits angebrachte Linearführungen mit dem Tragwerk verbunden. Des Weiteren muss ein Mechanismus (Federn, Spindeln) vorhanden sein, um die erforderliche Spannkraft einzustellen.

Im Falle eines Wälzlagerdefekts sind umfangreiche Demontage- und Montagearbeiten erforderlich, wobei sich die Wälzlager nur durch Längsverschieben bis zum Achsenende entfernen und wieder aufbringen lassen. Zwecks einfacherer Wartung und insbesondere aufgrund der Grösse des Wälzlagers und der sehr eingeschränkten Platzverhältnisse wird darauf verzichtet, die Wälzlager in die Hohlwelle einzupressen oder auf der Achse aufzupressen. Stattdessen werden sie gegen axiales Verschieben mittels auf der Achse montierten Stellringen gesichert.

Üblicherweise werden Wälzlager aus hoch härtbaren Stählen gefertigt, die wenig korrosionsbeständig sind und daher schnell rosten. Eine verwendete Stahlsorte ist zum Beispiel 100Cr6 (Werkstoff-Nr. 1.3505), ein Stahl mit einem Gehalt von ca. 1 % Kohlenstoff und 1,5 % Chrom. Weitere Stähle wie zum Beispiel 100CrMnSi6-4 und 100CrMo7 werden auch verwendet, wobei die Legierungselemente Mangan (Mn) und Molybdän (Mo) der besseren Durchhärtbarkeit dienen.

Da Fahrtreppen und Fahrsteige je nach Einsatzort und Einsatzbedingungen starkem Schmutz und Nässe ausgesetzt sein können, besteht die Möglichkeit, dass sich feuchter Schmutz im Bereich der Wälzlager ansammelt und sich dadurch zwischen dem Wälzlager und der Hohlwelle beziehungsweise der Achse Rost bilden kann, so dass sich das Wälzlager beim Austausch fast nicht mehr herauslösen lässt. Zudem kann der Schmutz bei lediglich gefetteten, nicht abgedichteten Lagern zu erheblichem Verschleiss führen, wenn er in den Bereich der Wälzkörper gelangt.

Die Aufgabe der vorliegenden Erfindung ist daher, einen einfachen und wirkungsvollen Schutz des Wälzlagers vor Schmutz und Nässe zu schaffen, der kostengünstig ist und eine zumindest gleich einfache Montage beziehungsweise Demontage des Wälzlagers ermöglicht.

Diese Aufgabe wird gelöst durch einen Fahrsteig oder eine Fahrtreppe mit einer Umlenkwelle und/oder einer Hauptantriebswelle nach Anspruch 1, welche mindestens eine Achse sowie ein auf der Achse angeordnetes Wälzlager umfasst. Der Fahrsteig oder die Fahrtreppe weist ferner mindestens einen Stellring auf, welcher Stellring einen hohlzylinderförmigen Ringkörper und mindestens eine Stellschraube aufweist. Die Stellschraube ist in einer Gewindebohrung angeordnet, die im Ringkörper durchgehend ausgebildet ist und an einem Innendurchmesser des Ringkörpers endet. Selbstverständlich kann der Stellring auch mehrere Gewindebohrungen aufweisen, in denen jeweils eine Stellschraube angeordnet ist. Vorzugsweise erstrecken sich diese Gewindebohrungen im Ringkörper in radialer Richtung bezüglich der Mittellängsachse des Ringkörpers und sind in gleichen Winkelmassen zueinander angeordnet.

Der Innendurchmesser des Ringkörpers ist auf eine, in montiertem Zustand durchragend angeordnete Achse der Hauptantriebswelle oder Umlenkwelle abgestimmt. Mit anderen Worten ist der Innendurchmesser des hohlzylinderförmigen Ringkörpers so gross, dass er sich ohne Kraftaufwand über die Achse schieben lässt. Hierbei kann der Innendurchmesser gegenüber dem Durchmesser der Achse ausreichend Spiel aufweisen. Der Stellring ist dem Wälzlager angrenzend, mittels der Stellschraube auf der Achse befestigt.

Um das Wälzlager vor Umwelteinflüssen zu schützen, ist ein Aussendurchmesser des Ringkörpers grösser als ein innerer Aussenringdurchmesser eines Aussenrings des in montiertem Zustand angrenzend angeordneten Wälzlagers der Hauptantriebswelle. Diese Überdeckung schützt bereits sehr gut den Bereich der Wälzkörper des Wälzlagers. Zudem ist in einer Ringseitenfläche des Ringkörpers, welche in montiertem Zustand gegen das Wälzlager gerichtet ist, mindestens eine zum Innendurchmesser konzentrisch angeordnete Ringnut angeordnet. Die Ringnut ist in einer Zone angeordnet, in der bei einer Drehung der Hauptantriebswelle eine Relativbewegung zwischen den Flächen der Ringnut und der unmittelbar benachbart angeordneten Flächen des Wälzlagers und/oder der Hohlwelle erfolgt. Die Ringnut kann hierbei als Labyrinth-Dichtung dienen, welche ein Eindringen von Flüssigkeiten und Schmutz zumindest wirkungsvoll bremst. Mit der Zeit kann sich fasriger Schmutz wie Staub in der Ringnut festsetzen und eine Art Filz-Ring bilden, der ein weiteres Eindringen von Schmutz und Staub wirkungsvoll verhindert. Unterstützt wird dies von Schmierstoffen des Lagers, die den fasrigen Schmutz zusammenhalten und das Eindringen von Flüssigkeit zusätzlich verhindern.

Da der Stellring dafür vorgesehen ist, das Wälzlager gegen eine axiale Verschiebung zu sichern, wird dieser ganz an das Wälzlager herangeschoben und dann werden die Stellschrauben angezogen. Um Reibung zwischen dem sich relativ zur Seitenfläche des Stellrings bewegenden Teils des Wälzlagers (Aussenring) und der Seitenfläche zu vermeiden, muss in montiertem Zustand zumindest zwischen dem Stellring und dem Aussenring des Wälzlagers ein kleiner Abstand vorhanden sein. Dieser Abstand kann beispielsweise durch eine schmale Passscheibe erwirkt werden, welche zwischen einem Innenring des Wälzlagers und dem Stellring auf der Achse angeordnet wird.

Anstelle einer solchen Passscheibe kann in einer Ausführung des Stellrings im Bereich des Innendurchmessers am Ringkörper ein vorstehender Ringvorsprung ausgebildet sein. Dieser Ringvorsprung steht von der Ringseitenfläche, welche die Ringnut enthält, ab und gibt so den vorgesehenen Abstand zwischen der Ringseitenfläche und dem angrenzenden Aussenring des Wälzlagers vor. Vorzugsweise ist der Vorsprung-Aussendurchmesser des Ringvorsprunges kleiner als der innere Aussenringdurchmesser des Aussenrings des in montiertem Zustand angrenzend angeordneten Wälzlagers.

In einer weiteren Ausführung des Stellrings kann ein kleiner Nutdurchmesser der Ringnut grösser sein, als der innere Durchmesser des Aussenrings des in montiertem Zustand angrenzenden Wälzlagers. Hierdurch wird die vorangehend beschriebene Dichtfunktion des Stellrings im Bereich des Aussenrings oder sogar im Bereich einer Stirnseite der Hohlwelle erwirkt.

Selbstverständlich ist es nicht zwingend erforderlich, dass sich aus faserigem Schmutz eine Dichtung bilden soll. Es kann bereits bei der Montage des Stellrings ein Dichtungselement vorgesehen sein, welches den durch den vorgesehenen Abstand zwischen dem Stellring und dem angrenzenden Wälzlager vorhandenen Spalt rundum abdichtet. Hierzu kann die Ringnut bezüglich ihrer Nutdurchmesser und ihres Nutquerschnittes auf ein ringförmiges Dichtungselement abgestimmt sein. Das Dichtungselement wird hierbei in der Ringnut angeordnet. In eingebautem Zustand ragt das Dichtungselement in vordefiniertem Überstand aus der Ringnut heraus. Der Überstand und der Abstand sind hierbei aufeinander abgestimmt, so dass einerseits der Spalt abgedichtet werden kann und andererseits das Dichtungselement im überstehenden Bereich nicht zu grossem Verschleiss unterworfen ist. Die dabei vorgesehene Dichtungspressung hängt von den Materialeigenschaften des Dichtungswerkstoffs und der Oberflächengüte der sich relativ zum Stellring beziehungsweise Dichtungselement bewegenden Oberfläche der Hohlwelle oder des Aussenrings des Wälzlagers ab.

In einer weiteren Ausführung des Stellrings kann die Ringnut einen Freistich aufweisen, durch welchen ein ringförmiger Nutvorsprung im Material des Ringkörpers ausgebildet ist. Dieser Nutvorsprung ist dazu vorgesehen, ein in der Ringnut eingesetztes Dichtungselement gegen einen axialen Austritt aus der Ringnut zu sichern.

Ein zur Montage vorbereiteter Stellring kann alle erforderlichen Stellschrauben und das in der Nut eingelegte Dichtungselement aufweisen.

Das Dichtungselement kann aus verschiedenen Materialien hergestellt sein, beispielsweise aus einem Buntmetall, welches sehr gute Gleiteigenschaften aufweist. Selbstverständlich können auch Dichtungselemente aus Verbundwerkstoffen eingesetzt werden. Vorzugsweise ist das Dichtungselement ein O-Ring aus einem Polymerwerkstoff, da solche Dichtungselemente gute Dichtungseigenschaften zeigen und zudem sehr preisgünstig sind.

In einer weiteren Ausführung des Stellrings kann im Ringkörper auch eine Schmierbohrung mit einer Eintrittsöffnung und einer Austrittsöffnung ausgebildet sein, wobei deren Austrittsöffnung zwischen der Ringnut und dem Innendurchmesser des Ringkörpers in die Ringseitenfläche mündet. Durch die Schmierbohrung ist es einerseits möglich, dem unmittelbar angrenzender Wälzlager Schmiermittel wie Schmierfett oder Schmieröl zuzuführen. Zudem kann hierdurch auch der Hohlraum zwischen der Achse, dem Wälzlager, dem Stellring und dem Dichtungselement mit Schmiermittel, vorzugsweise Schmierfett gefüllt werden. Dies verhindert zusätzlich das Eindringen von Flüssigkeiten, Feuchtigkeit und Schmutz und verhindert zudem, dass sich durch Temperaturwechsel in diesem Hohlraum Kondensat bildet. Dadurch kann ein Korrodieren des Wälzlagers verhindert werden, wodurch ein späterer Lagertausch entscheidend vereinfacht und die Lebensdauer des Lagers erhöht wird.

Die Eintrittsöffnung der Schmierbohrung kann beispielsweise an einer der Ringseitenfläche gegenüberliegenden Seite des Ringkörpers angeordnet sein.

Vorzugsweise weist die Eintrittsöffnung der Schmierbohrung ein Gewinde auf. Dadurch kann beispielsweise ein gebräuchlicher Schmiernippel mit Rückschlagventil an Eintrittsöffnung montiert werden, so dass nach einer Zuführung des Schmiermittels dieses nicht wieder aus der Schmierbohrung austritt. Die mit Gewinde versehene Eintrittsbohrung kann selbstverständlich auch mit einem einfachen Gewindestopfen wie beispielsweise einer passenden, kurzen Sechskantschraube mit Dichtungsring verschlossen werden.

Gegebenenfalls ist das seitliche Zuführen von Schmiermitteln durch das in unmittelbarer Nähe vorhandene Tragwerk erschwert. Um die Schmiermittelzufuhr zu vereinfachen, kann im Gewinde ein sogenannter Schmiernippel 90° montiert werden. Alternativ dazu kann die Eintrittsöffnung der Schmierbohrung auch an einer Fläche des Ringkörpers angeordnet sein, welche durch den Aussendurchmesser begrenzt ist.

Wie bereits eingangs erwähnt, weisen Fahrsteige oder Fahrtreppen eine Antriebsstation und eine Umlenkstation auf, wobei letztere üblicherweise nicht nur zum Umlenken, sondern auch zum Spannen des Stufenbandes oder Palettenbandes dient. Die Umlenkstation kann mit einer Umlenkwelle versehen sein. Die Antriebsstation weist eine Hauptantriebswelle auf. Die Umlenkwelle beziehungsweise die Hauptantriebswelle umfasst eine Achse, eine auf der Achse angeordnete Hohlwelle mit daran angeordneten Transportkettenräder sowie mindestens ein zwischen der Hohlwelle und der Achse angeordnetes Wälzlager. Der Fahrsteig oder die Fahrtreppe weisen ferner mindestens einen Stellring auf, welcher einer der vorangehend beschriebenen Ausführungs-Varianten entspricht. Dieser Stellring ist dem Wälzlager angrenzend auf der Achse mittels der mindestens einen Stellschraube befestigt, wobei die Ringnut des Stellrings gegen das Wälzlager gerichtet ist.

In der Ringnut des Stellrings kann ein ringförmiges Dichtungselement eingelegt sein, welches mit vordefiniertem Überstand aus der Ringnut herausragt. Hierbei ist ein vom vordefinierten Überstand abhängiger Abstand zwischen dem Wälzlager und dem Stellring vorgegeben. Dieser Abstand kann, wie weiter oben beschrieben, entweder durch die Breite einer Passscheibe oder durch den mit entsprechendem Mass abstehende Ringvorsprung vorgegeben werden.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind. Dabei zeigen:
- Figur 1: schematisch in längsgeschnittener Seitenansicht eine Fahrtreppe mit einem Tragwerk, in welchem zwischen einem ersten Umlenkbereich und einem zweiten Umlenkbereich Laufbahnschienen und ein umlaufendes Stufenband angeordnet sind;
- Figur 2: in vergrösserter Darstellung der in der Figur 1 angegebene Schnitt A-A;
- Figur 3: in vergrösserter Darstellung der in der Figur 2 angegebene Ausschnitt X;
- Figur 4: in vergrösserter Darstellung der in der Figur 3 angegebene Ausschnitt Y in einer ersten Ausgestaltung; und
- Figur 5: in vergrösserter Darstellung der in der Figur 3 angegebene Ausschnitt Y in einer zweiten Ausgestaltung.

Die Figuren sind lediglich schematisch und nicht massstabsgetreu. Gleiche Bezugszeichen bezeichnen in den verschiedenen Figuren gleiche oder gleichwirkende Merkmale.

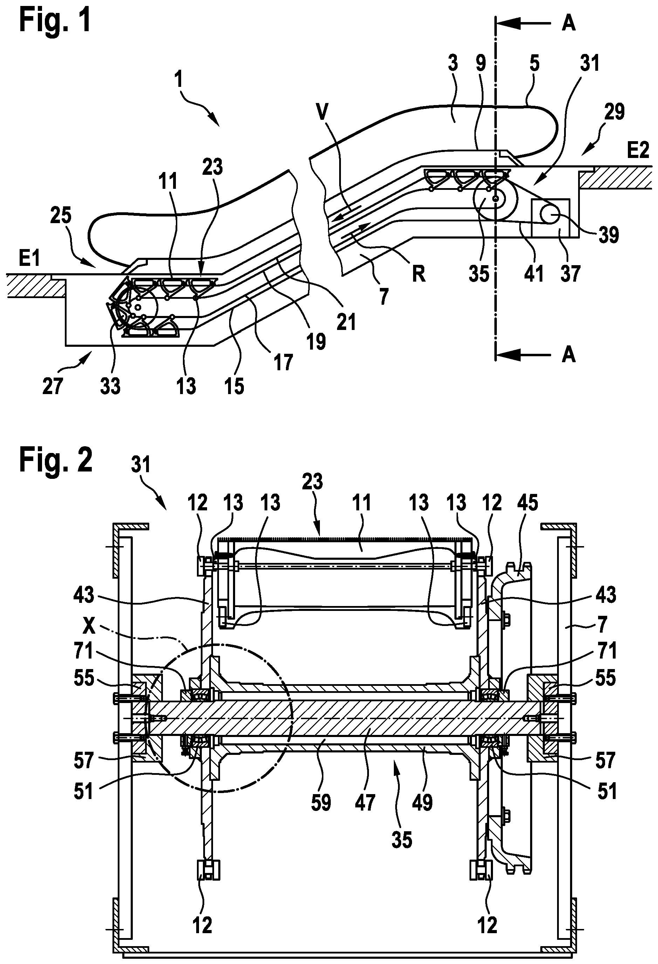

Figur 1 zeigt in längsgeschnittener Seitenansicht eine Fahrtreppe 1 mit zwei Balustraden 3, wobei aufgrund des Längsschnittes nur eine Balustrade 3 sichtbar ist. An jeder Balustrade 3 ist ein Handlauf 5 umlaufend angeordnet. Ferner weist die Fahrtreppe 1 ein in Umrissen dargestelltes Tragwerk 7 auf, welches die Balustraden 3 trägt. Die Balustraden 3 weisen Sockelbleche 9 auf, zwischen denen seitlich geführte Stufen 11 umlaufend angeordnet sind. Die Fahrtreppe 1 verbindet eine erste Etage E1 mit einer zweiten Etage E2. Laufrollen 13 der Stufen 11 fahren auf Laufbahnschienen 15, 17, 19, 21, die mit dem Tragwerk 7 der Fahrtreppe 1 verbunden sind. Das Tragwerk 7 kann ein Fachwerk, ein Träger, ein Fundament und dergleichen mehr sein.

Die Stufen 11 sind mittels nicht dargestellter Transportketten miteinander zu einem umlaufenden Stufenband 23 verbunden, wobei dieses der besseren Übersicht wegen nur teilweise dargestellt ist. Das Tragwerk 7 weist im Bereich der ersten Etage E1 einen ersten Umlenkbereich 25 mit einer Umlenkstation 27 und im Bereich der zweiten Etage E2 einen zweiten Umlenkbereich 29 mit einer Antriebsstation 31 auf, in welchen das Stufenband 23 zwischen einem Vorlauf V und einem Rücklauf R umgelenkt wird. Aufgrund der angegebenen Pfeilrichtung des Vorlaufs V und der Rücklaufs R werden im dargestellten Ausführungsbeispiel Benutzer von der zweiten Etage E2 zur ersten Etage E1 befördert. Selbstverständlich ist auch ein Betrieb der Fahrtreppe 1 in der Gegenrichtung möglich. Zur Umlenkung des Stufenbandes 23 ist im ersten Umlenkbereich 25 eine Umlenkwelle 33 und im zweiten Umlenkbereich 29 eine Hauptantriebswelle 35 drehbar angeordnet. Die Hauptantriebswelle 35 ist drehübertragend durch eine Antriebskette 41 mit einem Antriebsritzel 39 einer Antriebseinheit 37 verbunden. Selbstverständlich kann die Antriebseinheit 37 auch anders ausgestaltet sein und an einer anderen Stelle in der Fahrtreppe 1 angeordnet sein, um das Stufenband 23 anzutreiben.

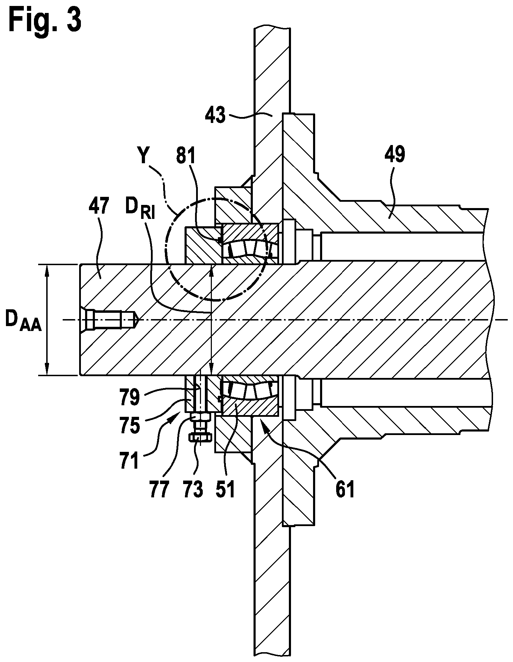

Die Figur 2 zeigt in vergrösserter Darstellung den in der Figur 1 angegebene Schnitt A-A durch die Antriebsstation 31. Die Figur 3 zeigt in vergrösserter Darstellung der in der Figur 2 angegebene Ausschnitt X. Nachfolgend werden beide Figuren gemeinsam beschrieben.

Die in der Figur 2 dargestellte Schnittebene A-A schneidet auch die in der Antriebsstation 31 angeordnete Hauptantriebswelle 35. Um eine hochbelastbare, formstabile und dennoch gewichtsoptimierte Konstruktion zu erhalten, ist die Hauptantriebswelle 35 als Hohlwellenkonstruktion ausgeführt. Eine derart ausgestaltete Hauptantriebswelle 35 weist eine feststehende Achse 47 auf, die im Tragwerk 7 der Fahrtreppe 1 gelagert ist. Als Verbindungselemente zum Tragwerk 7 werden zu beiden Enden der Achse 47 scheibenförmige Flansche 55 und Topfscheiben 57 verwendet. Die Achse 47 ist typischerweise mittels der Flansche 55 und Topfscheiben 57 fest am Tragwerk 7 verschraubt. Auf der Achse 47 wird eine Hohlwelle 49 mit zwei an dieser befestigten Transportkettenrädern 43 angeordnet. Mit anderen Worten ist die Achse 47 in der Bohrung 59 der Hohlwelle 49 angeordnet. Über die Transportkettenräder 43 werden die Transportketten 12 des Stufenbandes 23 geführt und umgelenkt, wobei die Stufen 11 zwischen den Transportketten 12 angeordnet sind.

Die Hohlwelle 49 und die über die Hohlwelle 49 miteinander verbundenen Transportkettenräder 43 sind mittels zwei Wälzlagern 51 auf der Achse 47 drehbar gelagert. Je nach Ausgestaltung sind die Wälzlager 51 in dafür vorgesehenen Aussparungen 61 (siehe Figur 3) der Transportkettenräder 43 oder der Hohlwelle 49 angeordnet.

Damit sich die Wälzlager 51 während des Betriebes nicht aus den Aussparungen 61 herausbewegen können, werden sie gegen eine axiale Verschiebung jeweils mit einem Stellring 71 gesichert, welcher dem Wälzlager 51 angrenzend, auf der Achse 47 mittels einer Stellschraube 73 befestigt ist. Der Stellring 71 weist einen hohlzylinderförmigen Ringkörper 75 auf. Die Stellschraube 73 ist in einer Gewindebohrung 79 des Ringkörpers 75 angeordnet. Damit die Stellschraube gegen die Achse 47 festgezogen werden kann, ist die Gewindebohrung 79 im Ringkörper 75 durchgehend ausgebildet und endet an einem Innendurchmesser D_{RI} des Ringkörpers 75. Der Innendurchmesser D_{RI} des Ringkörpers 75 ist auf die Achse 47 beziehungsweise deren Aussendurchmesser D_{AA} abgestimmt, so dass der Stellring 71 leicht über die Achse 47 geschoben werden kann, aber trotzdem nicht zu viel radiales Spiel zur Achse 47 aufweist (Schiebesitz). Um eine festgezogene Stellschraube 73 zu sichern, kann wie dargestellt, eine Kontermutter 77 vorgesehen sein. Selbstverständlich können auch andere Sicherungsmittel wie beispielsweise anaerobe Klebstoffe eingesetzt werden, um die Stellschraube 73 in der Gewindebohrung 79 gegen Lösen zu sichern.

Wie in der Beschreibung zu den Figuren 1 und 2 bereits erwähnt, weist die Fahrtreppe 1 des vorliegenden Ausführungsbeispiels eine Hauptantriebswelle 35 und eine Umlenkwelle 33 auf. Diese sind im Wesentlichen identisch ausgestaltet, so dass für beide Wellen 33, 35 gleiche Bauteile verwendet werden können. Da die Hauptantriebswelle 35 die Stufen 11 bzw. das Stufenband 23 antreibt, unterscheidet sich diese von der Umlenkwelle 33 nur durch einen Antriebszahnkranz 45, der seitlich an einem der beiden Transportkettenräder 43 angeordnet und mit diesem verschraubt ist.

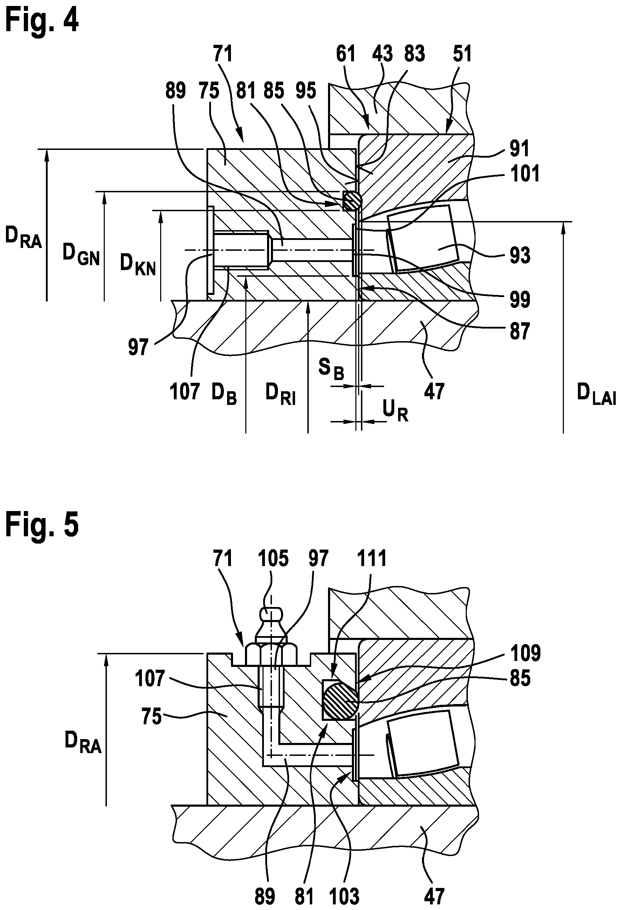

Wie die Figur 3 zeigt, weist der erfindungsgemässe Stellring 71 zumindest eine Ringnut 81 auf. Varianten dieser Ringnut 81 sowie weitere spezielle Ausgestaltungen des Stellringes 71 zeigen die Figuren 4 und 5, welche in vergrösserter Darstellung der in der Figur 3 angegebene Ausschnitt Y wiedergeben.

Wie in der Figur 4 dargestellt, ist ein Aussendurchmesser D_{RA} des Ringkörpers 75 grösser als ein innerer Aussenringdurchmesser D_{LAI} eines Aussenrings 91 eines in montiertem Zustand angrenzend angeordneten Wälzlagers 51. Hierdurch wird in montiertem Zustand das Wälzlager 51 stirnseitig zumindest bis über den Bereich seiner Wälzkörper 93 vom Ringkörper 75 des Stellrings 71 abgedeckt. Zudem ist in einer Ringseitenfläche 83 des Ringkörpers 75, die in montiertem Zustand gegen das Wälzlager 51 gerichtet ist, mindestens eine zum Innendurchmesser D_{RI} konzentrisch angeordnete Ringnut 81 angeordnet. Mit anderen Worten kann die Ringseitenfläche 83 nicht nur, wie dargestellt, eine Ringnut 81 aufweisen, sondern zwei und mehr Ringnuten 81, die konzentrisch zueinander und zum Innendurchmesser D_{RI} des Ringkörpers 75, angeordnet sind.

Wie die Figuren 4 und 5 zudem zeigen, ist ein kleiner Nutdurchmesser D_{KN} der Ringnut 81 grösser, als der innere Aussenringdurchmesser D_{LAI} des Aussenrings 91 des in montiertem Zustand angrenzenden Wälzlagers 51. Hierdurch wird die Dichtungszone der Ringnut 81 in den Bereich des Aussenrings 91 gelegt, so dass Schmutz im Bereich der Ringnut 81 hängen bleiben kann. Um die Schutzwirkung zu erhöhen, ist im vorliegenden Ausführungsbeispiel in der Ringnut 81 ein Dichtungselement 85 angeordnet. Hierdurch kann kein Schmutz und keine Feuchtigkeit mehr in den Bereich der Wälzkörper 93 gelangen. Wie dargestellt, kann das Dichtungselement 85 ein O-Ring aus einem weichelastischen Polymerwerkstoff sein.

Die Ringnut 81 ist bezüglich ihrer Nutdurchmesser D_{KN}, D_{GN} und ihres Nutquerschnittes auf das ringförmige Dichtungselement 85 abgestimmt so dass dieses in der Ringnut 81eingelegt, in vordefiniertem Überstand U_{R} aus der Ringnut 81 herausragt.

Des Weiteren ist im Bereich des Innendurchmessers D_{RI} am Ringkörper 75 ein Ringvorsprung 87 ausgebildet, der von der Ringseitenfläche 83, welche die Ringnut 81 enthält, einen Abstand S_{B} vorgebend, absteht. Ein Vorsprung-Aussendurchmesser D_{B} des Ringvorsprunges 87 ist hierbei kleiner, als der innere Aussenringdurchmesser D_{LAI} des Aussenrings 91 des in montiertem Zustand angrenzend angeordneten Wälzlagers 51.

Um gegen eindringende Feuchtigkeit ausreichende Dichtwirkung zu erreichen, muss das Dichtungselement 85 mit vorbestimmter Kraft gegen die benachbart angeordnete Seitenfläche 95 des Wälzlager- Aussenrings 91 pressen. Dieses Anpressen ist in der Figur 4 symbolisch durch das in den Aussenring 91 eindringende Dichtungselement 85 dargestellt. Tatsächlich ist die Seitenfläche des Aussenrings 91 aber eben und möglichst glatt, so dass das Dichtungselement 85 nur an der Seitenfläche 95 anliegt und zwischen dem Stellring 71 und dem Wälzlager 51 zusammengepresst ist. Da das Dichtungselement 85 weichelastische Materialeigenschaften aufweist, erzeug es diese Kraft in Abhängigkeit der Differenz zwischen dem Überstand U_{R} und dem Abstand S_{B}. Mit anderen Worten gibt der Ringvorsprung 87 ein Abstand S_{B} zwischen dem Wälzlager 51 und dem Stellring 71 vor, der aufgrund der vorgesehenen Kraft beziehungsweise Dichtungspressung vom vordefinierten Überstand U_{R} abhängig, dimensioniert wird.

Wie die Figur 4 zudem zeigt, ist im Ringkörper 75 eine Schmierbohrung 89 mit einer Eintrittsöffnung 97 und einer Austrittsöffnung 99 ausgebildet. Die Austrittsöffnung 99 mündet zwischen der Ringnut 81 und dem Innendurchmesser D_{RI} in die Ringseitenfläche 83 des Ringkörpers 75. Durch die Schmierbohrung 89 ist es einerseits möglich, dem unmittelbar angrenzender Wälzlager 51 Schmiermittel wie Schmierfett oder Schmieröl zuzuführen. Zudem kann hierdurch auch der Hohlraum 101 zwischen der Achse 47, dem Wälzlager 51, dem Stellring 71 und dem Dichtungselement 85 mit Schmiermittel, vorzugsweise Schmierfett gefüllt werden. Dies verhindert zusätzlich das Eindringen von Flüssigkeiten, Feuchtigkeit und Schmutz und verhindert zudem, dass sich durch Temperaturwechsel in diesem Hohlraum Kondensat bilden kann. Dadurch kann ein Korrodieren des Wälzlagers 51 in der Aussparung 61 verhindert werden, wodurch ein späterer Lagertausch entscheidend vereinfacht wird. Um eine bessere Verteilung des Schmiermittels im Hohlraum 101 zu erreichen, kann zudem eine Schmiernut 103 (siehe Figur 5) im Ringkörper 75 ausgebildet sein. Deren Ausgestaltung richtet sich nach den vorhandenen Fertigungsmöglichkeiten für den Stellring 71 und den Eigenschaften des Schmiermittels, weshalb an dieser Stelle auf weiterführende Erklärungen bezüglich eines idealen Querschnittsverlauf der Schmiernut 103 verzichtet wird. Die Eintrittsöffnung 97 der Schmierbohrung 89 ist an einer der Ringseitenfläche 83 gegenüberliegenden Seite des Ringkörpers 75 angeordnet. Die Eintrittsöffnung 97 der Schmierbohrung 89 weist ein Gewinde 107 auf, in welches ein nicht dargestellter Anschluss einer Schmiermittelpresse eingeschraubt werden kann. Um einen Austritt von verfülltem Schmiermittel zu verhindern, kann nach dem Entfernen des Anschlusses eine Schraube mit Dichtungsring als Stopfen eingeschraubt werden.

Die Figur 5 zeigt ebenfalls den in der Figur 3 angegebene Ausschnitt Y, aber mit einem Stellring 71 in einer alternativen Ausführungsform. Dessen Ringnut 81 weist einen Freistich 111 auf, durch welchen ein ringförmiger Nutvorsprung 109 im Material des Ringkörpers 75 ausgebildet ist. Dieser Nutvorsprung 109 ist dazu vorgesehen, ein in der Ringnut 81 eingesetztes Dichtungselement 85 gegen einen axialen Austritt aus der Ringnut 81 zu sichern. Des Weiteren ist die Eintrittsöffnung 97 der Schmierbohrung 89 an einer Fläche des Ringkörpers 75 angeordnet, welche durch den Aussendurchmesser D_{RA} begrenzt ist. Die Eintrittsöffnung 97 ist zudem mit einem gebräuchlichen Schmiernippel 105 mit Rückschlagventil versehen, so dass das Wartungspersonal bei Bedarf bequem Schmiermittel nachfüllen kann, ohne zuerst eine Verschlussschraube zu entfernen.

Obwohl die Figur 1 eine Fahrtreppe 1 mit einem Stufenband 23 zeigt, ist es offensichtlich, dass die vorliegende Erfindung auch für einen Fahrsteig mit einem Palettenband geeignet ist. Zudem ist es offensichtlich, dass die unterschiedlichen Ausprägungen von Ringnuten 81 und Anordnungen von Eintrittsöffnungen 97 miteinander kombiniert werden können.

Abschliessend ist darauf hinzuweisen, dass Begriffe wie "aufweisend", "umfassend", etc. keine anderen Elemente oder Schritte ausschliessen und Begriffe wie "eine" oder "ein" keine Vielzahl ausschliessen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele im Schutzumfang der beigefügten Ansprüche verwendet werden können. Bezugszeichen in den Ansprüchen sind nicht als Einschränkung anzusehen.

## Patentansprüche

1. Fahrsteig oder Fahrtreppe (1) mit einer Umlenkwelle (33) und/oder einer Hauptantriebswelle (35), welche mindestens eine Achse (47) sowie ein auf der Achse (47) angeordnetes Wälzlager (51) umfasst und der Fahrsteig oder die Fahrtreppe (1) ferner mindestens einen Stellring (71) aufweist, welcher Stellring (71) einen hohlzylinderförmigen Ringkörper (75) und mindestens eine Stellschraube (73) aufweist, wobei die Stellschraube (73) in einer Gewindebohrung (79) angeordnet ist, die im Ringkörper (75) durchgehend ausgebildet ist und an einem Innendurchmesser (D_{RI}) des Ringkörpers (75) endet, und
wobei der Innendurchmesser (D_{RI}) des Ringkörpers (75) auf die, in montiertem Zustand durchragend angeordnete Achse (47) der Hauptantriebswelle (35) oder Umlenkwelle (33) abgestimmt ist und der Stellring dem Wälzlager (51) angrenzend auf der Achse (47) mittels der Stellschraube (73) befestigt ist, **dadurch gekennzeichnet,**
• **dass** ein Aussendurchmesser (D_{RA}) des Ringkörpers (75) grösser ist als ein innerer Aussenringdurchmesser (D_{LAI}) eines Aussenrings (91) des in montiertem Zustand angrenzend angeordneten Wälzlagers (51) der Hauptantriebswelle (35) oder Umlenkwelle (33); und
• **dass** in einer Ringseitenfläche (83) des Ringkörpers (75), welche in montiertem Zustand gegen das Wälzlager (51) gerichtet ist, mindestens eine zum Innendurchmesser (D_{RI}) konzentrisch angeordnete Ringnut (81) ausgebildet ist.

2. Fahrsteig oder Fahrtreppe (1) nach Anspruch 1, wobei ein kleiner Nutdurchmesser (D_{KN}) der Ringnut (81) grösser ist, als der innere Aussenringdurchmesser (D_{LAI}) des Aussenrings (91) des in montiertem Zustand angrenzenden Wälzlagers (51).

3. Fahrsteig oder Fahrtreppe (1) nach Anspruch 1 oder 2, wobei im Bereich des Innendurchmessers (D_{RI}) am Ringkörper (75) ein Ringvorsprung (87) ausgebildet ist, der von der Ringseitenfläche (83), welche die Ringnut (81) enthält, einen Abstand (S_{B}) vorgebend, absteht und dessen Vorsprung-Aussendurchmesser (D_{B}) kleiner ist, als der innere Aussenringdurchmesser (D_{LAI}) des Aussenrings (91) des in montiertem Zustand angrenzend angeordneten Wälzlagers (51).

4. Fahrsteig oder Fahrtreppe (1) nach einem der Ansprüche 1 bis 3, wobei die Ringnut (81) bezüglich ihrer Nutdurchmesser (D_{GN}, D_{KN}) und ihres Nutquerschnittes auf ein ringförmiges Dichtungselement (85) abgestimmt ist, welches vorgesehen ist, in der Ringnut (81) angeordnet zu werden und in eingebautem Zustand in vordefiniertem Überstand (U_{R}) aus der Ringnut (81) herauszuragen.

5. Fahrsteig oder Fahrtreppe (1) nach Anspruch 3, wobei die Ringnut (81) einen Freistich (111) aufweist, durch welchen ein ringförmiger Nutvorsprung (109) im Material des Ringkörpers (75) ausgebildet ist und welcher Nutvorsprung (109) dazu vorgesehen ist, ein in der Ringnut (81) eingesetztes Dichtungselement (85) gegen einen axialen Austritt aus der Ringnut (81) zu sichern.

6. Fahrsteig oder Fahrtreppe (1) nach Anspruch 4 oder 5 wobei der Stellring (71) ein Dichtungselement (85) aufweist.

7. Fahrsteig oder Fahrtreppe (1) nach Anspruch 6, wobei das Dichtungselement (85) ein O-Ring aus einem Polymerwerkstoff ist.

8. Fahrsteig oder Fahrtreppe (1) nach einem der vorangehenden Ansprüche, wobei im Ringkörper (75) eine Schmierbohrung (89) mit einer Eintrittsöffnung (97) und einer Austrittsöffnung (99) ausgebildet ist, wobei deren Austrittsöffnung (99) zwischen der Ringnut (81) und dem Innendurchmesser (D_{RI}) in die Ringseitenfläche (83) mündet.

9. Fahrsteig oder Fahrtreppe (1) nach Anspruch 8, wobei die Eintrittsöffnung (97) der Schmierbohrung (89) an einer der Ringseitenfläche (83) gegenüberliegenden Seite des Ringkörpers (75) angeordnet ist.

10. Fahrsteig oder Fahrtreppe (1) nach Anspruch 8, wobei die Eintrittsöffnung (97) der Schmierbohrung (89) an einer radialen Fläche des Ringkörpers (75) angeordnet ist, welche durch den Aussendurchmesser (D_{RA}) begrenzt ist.

11. Fahrsteig oder Fahrtreppe (1) nach einem der Ansprüche 8 bis 10, wobei die Eintrittsöffnung (97) der Schmierbohrung (89) ein Gewinde (107) aufweist.

12. Fahrsteig oder Fahrtreppe (1) nach einem der Ansprüche 1 bis 11, wobei in der Ringnut (81) des Stellrings (71) ein ringförmiges Dichtungselement (85) eingelegt ist, welches mit vordefiniertem Überstand (U_{R}) aus der Ringnut (81) herausragt und wobei ein vom vordefinierten Überstand (U_{R}) abhängiger Abstand (S_{B}) zwischen dem Wälzlager (51) und dem Stellring (71) vorgegeben ist.

## Claims

1. Moving walkway or escalator (1) with a deflection shaft (33) and/or a main drive shaft (35) comprising at least one axle (47) and a roller bearing (51) arranged on the axle (47), and the moving walkway or escalator (1) further comprising at least one adjusting ring (71) which the adjusting ring (71) comprising a hollow cylindrical annular body (75) and at least one adjusting screw (73), wherein the adjusting screw (73) being arranged in a threaded hole (79) which is formed right through the annular body (75) and ends at an inside diameter (D_{RI}) of the annular body (75), and
the inside diameter (D_{RI}) of the annular body (75) being matched to the axle (47) of the main drive shaft (35) or the deflection shaft (33), and the adjusting ring is fastened to the roller bearing (51) adjacent to the axle (47) by means of the adjusting screw (73), **characterized in that**
• an outside diameter (D_{RA}) of the annular body (75) is greater than an inner outside ring diameter (D_{LAI}) of the outer ring (91) of a roller bearing (51) of the main drive shaft (35) or deflection shaft (33) arranged adjacently in the assembled state; and
• at least one annular groove (81) arranged concentrically to the inside diameter (D_{RI}) is formed in a lateral ring face (83) of the annular body (75) which is directed towards the roller bearing (51) in the assembled state.

2. Moving walkway or escalator (1) according to Claim 1, wherein a small groove diameter (D_{KN}) of the annular groove (81) is greater than the inner outside ring diameter (D_{LAI}) of the outer ring (91) of the roller bearing (51) which is adjacent in the assembled state.

3. Moving walkway or escalator (1) according to Claim 1 or Claim 2, wherein an annular projection (87) is formed on the annular body (75), in the region of the inside diameter (D_{RI}), which annular projection protrudes by a distance (S_{B}) from the lateral ring face (83) that contains the annular groove (81), and its projection outside diameter (D_{B}) is smaller than the inner outside ring diameter (D_{LAI}) of the outer ring (91) of the roller bearing (51) arranged adjacently in the assembled state.

4. Moving walkway or escalator (1) according to any one of Claims 1 to 3, wherein the annular groove (81) is matched, with respect to its groove diameter (D_{GN}, D_{KN}) and its groove cross-section, to an annular sealing element (85) which is provided for being arranged in the annular groove (81) and for protruding from the annular groove (81) with a predefined overhang (U_{R}) in the installed state.

5. Moving walkway or escalator (1) according to Claim 3, wherein the annular groove (81) has an undercut (111) by means of which an annular groove projection (109) is formed in the material of the annular body (75), and which groove projection (109) is provided for securing a sealing element (85) inserted in the annular groove (81) against emerging axially from the annular groove (81).

6. Moving walkway or escalator (1) according to Claim 4 or Claim 5, wherein the adjusting ring (71) comprising a sealing element (85).

7. Moving walkway or escalator (1) according to Claim 6, wherein the sealing element (85) is an O-ring made of a polymer material.

8. Moving walkway or escalator (1) according to any one of the preceding claims, wherein a lubrication hole (89) having an inlet opening (97) and an outlet opening (99) is formed in the annular body (75), wherein the outlet opening (99) thereof opens into the lateral ring face (83) between the annular groove (81) and the inside diameter (D_{RI}).

9. Moving walkway or escalator (1) according to Claim 8, wherein the inlet opening (97) of the lubrication hole (89) is arranged on a side of the annular body (75) opposite the lateral ring face (83).

10. Moving walkway or escalator (1) according to Claim 8, wherein the inlet opening (97) of the lubrication hole (89) is arranged on a radial surface of the annular body (75) which is delimited by the external diameter (D_{RA}).

11. Moving walkway or escalator (1) according to any one of Claims 8 to 10, wherein the inlet opening (97) of the lubrication hole (89) has a thread (107).

12. Moving walkway or escalator (1) according to any one of Claims 1 to 11, wherein an annular sealing element (85) is inserted in the annular groove (81) of the adjusting ring (71), which sealing element protrudes from the annular groove (81) with a predefined overhang (U_{R}), and wherein a distance (S_{B}) that is dependent on the predefined overhang (U_{R}) is defined between the roller bearing (51) and the adjusting ring (71).

## Revendications

1. Trottoir roulant ou escalier mécanique (1) avec un arbre de renvoi (33) et/ou un arbre d'entraînement principal (35), comprenant au moins un axe (47) ainsi qu'un roulement (51) disposé sur l'axe (47), et le trottoir roulant ou l'escalier mécanique (1) comprend en outre au moins une bague de réglage (71), laquelle comprend un corps annulaire cylindrique creux (75) et au moins une vis de réglage (73), la vis de réglage (73) étant disposée dans un trou taraudé (79) qui traverse le corps annulaire (75) et débouche sur un diamètre intérieur (DRI) du corps annulaire (75), et le diamètre intérieur (DRI) du corps annulaire (75) étant adapté à l'axe (47) de l'arbre d'entraînement principal (35) ou de l'arbre de renvoi (33) monté à l'état assemblé, et la bague de réglage étant fixée sur l'axe (47) adjacent au roulement (51) au moyen de la vis de réglage (73), **caractérisé en ce que**
• le diamètre extérieur (D_{RA}) du corps annulaire (75) est supérieur au diamètre intérieur (D_{LAI}) d'une bague extérieure (91) du palier à roulement (51) de l'arbre d'entraînement principal (35) ou de l'arbre de renvoi (33) disposé de manière adjacente à l'état monté ; et
• qu'au moins une rainure annulaire (81) disposée de manière concentrique par rapport au diamètre intérieur (D_{RI}) est formée dans une surface latérale annulaire (83) du corps annulaire (75) qui, à l'état monté, est orientée vers le palier à roulement (51).

2. Trottoir roulant ou escalier mécanique (1) selon la revendication 1, dans lequel un diamètre de gorge inférieur (D_{KN}) de la gorge annulaire (81) est supérieur au diamètre extérieur interne (D_{LA}) de la bague extérieure (91) du roulement (51) disposé de façon adjacente à l'état monté.

3. Trottoir roulant ou escalier mécanique (1) selon la revendication 1 ou 2, dans lequel, au niveau du diamètre intérieur (D_{RI}) du corps annulaire (75), une saillie annulaire (87) est formée, saillant à une distance prédéfinie (SB) de la face latérale annulaire (83) contenant la gorge annulaire (81), et dont le diamètre extérieur (D_{B}) est inférieur au diamètre extérieur interne (D_{LAI}) de la bague extérieure (91) du roulement (51) disposé de façon adjacente à l'état monté.

4. Trottoir roulant ou escalier mécanique (1) selon l'une des revendications 1 à 3, dans lequel la gorge annulaire (81), par rapport à ses diamètres de gorge (D_{GN}, D_{KN}) et à sa section de gorge, est adaptée à un élément d'étanchéité annulaire (85) destiné à être disposé dans la gorge annulaire (81) et, à l'état monté, à dépasser avec un dépassement prédéfini (UR) de la gorge annulaire (81).

5. Trottoir roulant ou escalier mécanique (1) selon la revendication 3, dans lequel la gorge annulaire (81) présente un évidement (111), par lequel une saillie annulaire de gorge (109) est formée dans la matière du corps annulaire (75), cette saillie (109) servant à empêcher un élément d'étanchéité (85) inséré dans la gorge annulaire (81) de sortir axialement de la gorge annulaire (81).

6. Trottoir roulant ou escalier mécanique (1) selon la revendication 4 ou 5, dans lequel la bague de réglage (71) comporte un élément d'étanchéité (85).

7. Trottoir roulant ou escalier mécanique (1) selon la revendication 6, dans lequel l'élément d'étanchéité (85) est un joint torique en matériau polymère.

8. Trottoir roulant ou escalier mécanique (1) selon l'une des revendications précédentes, dans lequel un trou de lubrification (89) avec une ouverture d'entrée (97) et une ouverture de sortie (99) est formé dans le corps annulaire (75), son ouverture de sortie (99) débouchant sur la face latérale annulaire (83) entre la gorge annulaire (81) et le diamètre intérieur (D_{RI}).

9. Trottoir roulant ou escalier mécanique (1) selon la revendication 8, dans lequel l'ouverture d'entrée (97) du trou de lubrification (89) est disposée sur un côté du corps annulaire (75) opposé à la face latérale annulaire (83).

10. Trottoir roulant ou escalier mécanique (1) selon la revendication 8, dans lequel l'ouverture d'entrée (97) du trou de lubrification (89) est disposée sur une face radiale du corps annulaire (75) délimitée par le diamètre extérieur (D_{RA}).

11. Trottoir roulant ou escalier mécanique (1) selon l'une des revendications 8 à 10, dans lequel l'ouverture d'entrée (97) du trou de lubrification (89) est filetée (107).

12. Trottoir roulant ou escalier mécanique (1) selon l'une des revendications 1 à 11, dans lequel un élément d'étanchéité annulaire (85) est inséré dans la gorge annulaire (81) de la bague de réglage (71), lequel dépasse avec un dépassement prédéfini (U_{R}) de la gorge annulaire (81), et dans lequel une distance (S_{B}) dépendant du dépassement prédéfini (U_{R}) est définie entre le roulement (51) et la bague de réglage (71).
